(19) European Patent Office / Europäisches Patentamt / Office européen des brevets

(11) **EP 2 206 438 B1**

(12) **EUROPEAN PATENT SPECIFICATION**

(45) Date of publication and mention
of the grant of the patent:
**08.02.2012 Bulletin 2012/06**

(51) Int Cl.:
*A23G 9/00* (2006.01)   *A23G 9/32* (2006.01)
*A23L 2/38* (2006.01)   *A23L 2/52* (2006.01)

(21) Application number: **09177845.6**

(22) Date of filing: **03.12.2009**

(54) **Frozen confectionery and beverage products comprising theobromine and caffeine**

Gefrorene Süßwarenprodukte und Getränke, die Theobromin und Koffein enthalten

Produits de confiserie surgelés et des boissons, comprenant de la théobromine et de la caféine

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.12.2008 EP 08172987**
**29.12.2008 EP 08172986**

(43) Date of publication of application:
**14.07.2010 Bulletin 2010/28**

(73) Proprietors:
• **Unilever PLC, A Company Registered in England and**
**Wales under Company no. 41424**
**London EC4Y 0DY**
**Greater London (GB)**
Designated Contracting States:
**CY GB IE MT**
• **Unilever N.V.**
**3013 AL Rotterdam (NL)**
Designated Contracting States:
**AT BE BG CH CZ DE DK EE ES FI FR GR HR HU IS IT LI LT LU LV MC MK NL NO PL PT RO SE SI SK SM TR**

(72) Inventors:
• **Berry, Mark John**
**Bedford, Bedfordshire MK44 1LQ (GB)**
• **Hoddle, Andrew**
**Bedford, Bedfordshire MK44 1LQ (GB)**
• **Mitchell, Ellen Siobhan**
**3133 AT Vlaardingen (NL)**
• **Pleasants, Michael William**
**Bedford, Bedfordshire MK44 1LQ (GB)**

(74) Representative: **Clarke, Christopher John**
**Unilever Patent Group**
**Colworth House**
**Sharnbrook**
**Bedford MK44 1LQ (GB)**

(56) References cited:
**US-A1- 2004 005 347**

• **M.U. ETENG ET AL.: "Caffein and theobromine levels in selected Nigerian beverages" PLANT FOODS FOR HUMAN NUTRITION, [Online] vol. 54, 12 October 1999 (1999-10-12), pages 337-344, XP002570321 Retrieved from the Internet: URL: http://www.springerlink.com/content/w5 21t3m7606871g7/fulltext.pdf> [retrieved on 2010-02-23]**
• **Anonymous/loule02: "Picard Best chocolat -Eclat-moi la fève..." 22 June 2005 (2005-06-22), pages 1-2, XP002569867 Retrieved from the Internet: URL:http://www.ciao.fr/Picard_Best_ chocola t__751226> [retrieved on 2010-02-22]**
• **Anonymous: "Xocai activ" 23 February 2008 (2008-02-23), pages 1-4, XP002570322 Retrieved from the Internet: URL:http: //web.archive.org/web/20080223142 847/http: //www.chocolatethatheals.com/xoca i-activ.html> [retrieved on 2010-02-24]**
• **RACHEL/ANONYMOUS: "DARK CHOCOLATE ICE CREAM WITH COCOA NIBS" COCONUT & LIME RECIPES, [Online] 23 April 2005 (2005-04-23), XP002516346 Retrieved from the Internet: URL:http://coconutlime.blogspot.com/ 2008/0 4/dark-chocolate-ice-cream-with-cocoa.html > [retrieved on 2009-02-20]**

- H.J.SMITH, E.A.GAFFAN, P.J.ROGERS: "Methylxanthines are the psycho-pharmacologically active constitutes of chocolate" PSYCHOPHARMACOLOGY, no. 176, 9 January 2004 (2004-01-09), pages 412-419, XP002516347
- ANONYMOUS: "Nutritional values of Dark chocolate & Cocoa powder" USDA NATIONAL NUTRIENT DATABASE, [Online] January 2008 (2008-01), XP002516348 Retrieved from the Internet: URL:http://www.nal.usda.gov/fnic/foodcomp/ search/> [retrieved on 2009-02-20]
- B.BUIJSSE, E.FESKENS, F.KOK, D.KROMHOUT: "Cocoa Intake, Blood pressure and Cardiovascular Mortality" AMERICAL MEDICAL ASSOCIATION, vol. 166, 27 February 2006 (2006-02-27), pages 411-417, XP002516440
- NATASHA TELLES: "Mood foods: Dancing to a merry tune" INTERNET CITATION 18 February 2008 (2008-02-18), pages 1-2, XP002516349 Retrieved from the Internet: URL:http://www.frost.com/prod/servlet/mark et-insight-print.pag?docid=1217210> [retrieved on 2009-02-23]
- Anonymous: "Alnatura Glücks-Tee, Glück zum Trinken" 12 August 2006 (2006-08-12), pages 1-2, XP002570323 Retrieved from the Internet: URL: http://www.ciao.de/Alnatura_Glucks_Tee __ 2333577> [retrieved on 2010-02-23]
- Anonymous/ Picard: "4 Best chocolat 70% de cacao-fèves de cacao" 22 February 2010 (2010-02-22), XP002569868 Retrieved from the Internet: URL:http://www.picard.fr/Modules/ LaBoutiqu e/les_batonnets_glaces99/Produits/ 4_best_c hocolat_70_de_cacao_feves_de_ cacao1736.htm l> [retrieved on 2010-02-22]

## Description

### Technical Field of the Invention

The present invention relates to frozen confection or beverages that are mood-enhancing when consumed and to frozen confection or beverages for the enhancement of mood without transient elevation of blood pressure.

### Background to the invention

Chocolate and chocolate products are believed to be mood enhancing. Part of the reason may be the pleasant taste that can help to make consumers feel happy. Additionally, chocolate contains substances that, when consumed in sufficient quantity, are psycho-pharmacologically active (Smit et al., Psychopharmacology 2004, 176, pp 412-419). In particular caffeine (1,3,7-trimethylxanthine) and theobromine (3,7-dimethylxanthine) are known to affect the mood when ingested, and additionally have other beneficial effects like improved brain function, higher alertness and appetite suppression. It would be appealing to many consumers to eat a food product to enhance their mood rather than, for example, to take prescription medicines. Typically, cocoa powder comprises approximately 2 wt% theobromine and 0.2% caffeine. However, these amounts are too low to have a substantial effect on mood states at the normal levels of cocoa solids found in most food products. Therefore there is a desire to enrich food products with caffeine and theobromine in order to achieve the beneficial effects of these compounds when consumed as ingredients of a food product. For example, WO 2007 / 042745 discloses chocolate based appetite suppressants containing enhanced amounts of theobromine.

Caffeine is well-known for its effect on mental states. However, caffeine is also known to cause a transient but significant increase in blood pressure. Furthermore, both caffeine and theobromine have an intrinsically bitter taste. It is therefore desirable to provide products which have the mood enhancing effects of both theobromine and caffeine, but without the latter's unwanted effect on blood pressure and without the bitter taste.

The article "Caffeine and theobromine levels in selected Nigerian beverages", M.U. Eteng et al, Plant foods for Human Nutrition (vol. 54, pages 337-344, 1999) describes that caffeine and theobromine contents were determined in samples of selected Nigerian beverage products.

The online article "Picard Best chocolat - Eclate-moi la fève" (available at http://www.ciao.fr/Picard_Best_ chocolat_751226) discusses ice-cream sticks from the manufacturer Picard.

The article "Cocoa Intake, Blood Pressure and Cardiovascular Mortality", Buijsse et al, Arch Intern Med., (Vol 166, Feb 27 2006) studied whether habitual coca intake was cross-sectionally related with cardiovascular mortality.

### Brief Description of the Invention

We have now found that it is possible to provide a food product containing elevated amounts of theobromine and caffeine. Accordingly, in a first aspect the present invention provides a frozen confection or a beverage which contains at least 400mg of theobromine and at least 40mg of caffeine per 100 grams of the product. Surprisingly, we have found that theobromine can counteract the transient elevation in blood pressure which arises from the consumption of caffeine. "Transient elevation" as used herein refers to the increase in blood pressure which occurs within 3 hours of consuming caffeine.

In one embodiment of the present invention the products are frozen confections. The present inventors have recognised that a frozen confection such as ice cream is an especially suitable type of mood-enhancing food product. For example, ice cream has been shown to have an effect on the orbitofrontal cortex, a part of the brain that is known to activate when people enjoy themselves (see for example "The Guardian", April 29, 2005). In addition, we have found that frozen confection products containing high levels of theobromine and caffeine are more palatable than chocolate containing similar amounts of theobromine and caffeine. In a further embodiment the food products according to the present invention are preferably beverages. We have also found that beverages containing high levels of theobromine and caffeine are palatable.

The products according to the present invention preferably comprise a total amount of at least 500 mg of theobromine, more preferably at least 600 mg, most preferably at least 700 mg per 100g of the product.

The products according to the present invention preferably comprise a total amount of at least 50 mg of caffeine, more preferably at least 70 mg, most preferably at least 100 mg per 100g of the product.

Preferably the ratio of the amounts of theobromine and caffeine is at least 3:1, more preferably at least 5:1.

Products of the present invention preferably comprise cocoa solids, for example in a chocolate or chocolate analogue or in the form of cocoa nibs. Theobromine and caffeine are naturally present in cocoa solids in the preferred ratios. Products which contain enhanced amounts of substances which are naturally present are generally more appealing to consumers, and moreover the intrinsic bitter taste of caffeine and theobromine is expected in products which contain cocoa solids.

Preferably the product comprises from 25 to 45 wt% of a chocolate or chocolate analogue.

Preferably the product comprises from 5 to 20 wt% of cocoa nibs.

Where products of the present invention are beverages, they are preferably tea-based beverages, coffee-based beverages or cocoa-based beverages. Cocoa-based beverages according to the invention may comprise cocoa powder, chocolate and cocoa nibs.

The portion size of the products of the present invention is preferably at most 500g, more preferably at most 250g and more preferably still at most 125g. The portion size is at preferably least 50g, more preferably at least 65g and more preferably still at least 75g

In a further aspect, the present invention provides a frozen confection or a beverage product comprising at least 400mg of theobromine and at least 40mg of caffeine per 100 grams of the product for the enhancement of mood without transient elevation of blood pressure.

## Detailed Description of the Invention

All percentages, unless otherwise stated, refer to the percentage by weight, with the exception of percentages cited in relation to the overrun.

The term "frozen confection" means an edible confection made by freezing a mix of ingredients which includes water. Frozen confections typically contain fat, non-fat milk solids and sugars, together with other minor ingredients such as stabilisers, emulsifiers, colours and flavourings. Frozen confections include ice cream, water ice, frozen yoghurt and the like.

Products consisting of chocolate-flavoured ice cream coated with chocolate or a chocolate analogue have been known for many years. The term "chocolate" as used herein includes dark chocolate and milk chocolate. The term "chocolate analogue" means chocolate-like fat-based confectionery compositions made with fats other than cocoa butter (for example cocoa butter equivalents, coconut oil or other vegetable oils). Such chocolate analogues are sometimes known as "couvertures". Chocolate analogues need not conform to standardized definitions of chocolate which are used in many countries. In addition to fat and cocoa solids, chocolate and chocolate analogues may contain milk solids, sugar or other sweeteners and flavourings. These products contain some theobromine and caffeine both from the cocoa solids which are used to flavour the ice cream and from the cocoa solids used in the coating. The quantities of theobromine and caffeine in a chocolate-flavoured ice cream can be estimated by adding the contribution from each ingredient using the values given in chapter 10 of "Chocolate and Cocoa" Ed. Knight, Blackwell Science Ltd. (1999). Cocoa mass (=chocolate liquor) contains about 1.22% theobromine and 0.21 % caffeine. Cocoa nibs have the same composition as cocoa mass. The term "cocoa nibs" means small particles of cocoa bean. They are produced by drying cocoa beans, breaking them and then removing the pieces of shell. The remaining pieces of the cocoa bean kernel are known as cocoa nibs. Nibs are typically particles of about 2 - 7mm in size, such as about 3mm. Cocoa powder contains 1.89 - 2.69% theobromine and 0.16 - 0.31% caffeine. Using this method, we have estimated that conventional chocolate ice creams contain about 70mg theobromine and 3mg of caffeine per 100 grams of ice cream.

The quantities can also be analytically determined by removing fat from the sample and analysing by HPLC. For example, Craig et al. (Journal of Food Science, vol. 49, January 1984, p.302-303) reported theobromine and caffeine levels in chocolate ice cream of 62 mg and 3.2 mg per 100g of ice cream respectively.

The maximum amount of cocoa powder that can be used in frozen confections, such as chocolate-flavoured ice cream, is about 12 wt%. If greater amounts of cocoa powder are used, the unfrozen mix becomes very viscous, and hence difficult to process, and in particular, difficult to aerate. This results in a hard, dense and unpleasant frozen confection. Similarly, the maximum amount of cocoa powder that can be used in the chocolate / chocolate analogue is about 25%. This is because the fat content of the chocolate / chocolate analogue must be at least 45% in order for it to be sufficiently fluid so that it is suitable for coating ice creams, and the sugar content must be at least about 30% so that it has an acceptable taste.

Chocolate-flavoured ice creams that are coated with dark chocolate or that contain cocoa nibs can contain somewhat higher levels of theobromine and caffeine than standard chocolate ice creams.

Of the commercially available ice cream products that the present inventors have investigated, Magnum™ Essence contains the highest levels of theobromine and caffeine. This product is a chocolate ice cream coated with chocolate and containing a dark chocolate core. Using HPLC (as described in example 1 below) it was found to contain a total of approximately 320mg theobromine and 30mg caffeine per 100 grams.

Certain beverages, such as cocoa-based beverages also contain low levels of theobromine and caffeine. However these beverages do not contain levels high enough to achieve the beneficial effects of these compounds. Other beverages, such as tea- and coffee-based drinks also do not have sufficiently high levels of theobromine.

The products of the present invention contain higher amounts of theobromine and caffeine than previously known products. The source of the theobromine and caffeine in the present invention may be any natural or synthetic source. The theobromine and / or caffeine added to the frozen confection may be from a synthetic source. For example caffeine and theobromine can be bought in pure form. The theobromine and / or caffeine may also originate from a natural source, for example a cocoa extract containing a relatively high concentration of caffeine and theobromine. Any other source of theobromine and / or caffeine may be suitable as well.

The products of the present invention are preferably aerated, i.e. they have an overrun of more than 20%, preferably more than 50%, more preferably more than 75%. Preferably the products have an overrun of less than 200%, more preferably less than 150%, most preferably less than 120%. Overrun is defined by equation as follows and is measured at atmospheric pressure

$$\text{overrun \%} = \frac{\text{density of mix - density of frozen confection}}{\text{density of frozen confection}} \times 100$$

The frozen confection products of the invention preferably contain cocoa solids, for example chocolate-flavoured ice cream. Frozen confection products according to the invention may contain, in addition to the frozen confection (e.g. ice cream), other sources of cocoa solids, and hence theobromine and caffeine. In one embodiment, the frozen confection product of the invention contains a chocolate or chocolate analogue and / or cocoa nibs. The chocolate or chocolate analogue may be included in the frozen confection product in any suitable form, such as a coating on the frozen confection, as pieces (inclusions) located within the frozen confection, or as a sauce, e.g. a ripple or swirl in the frozen confection. Preferably the chocolate or chocolate analogue constitutes from 20 to 60% (by weight) of the frozen confection product, more preferably from 25 to 45%. Cocoa nibs may be incorporated into the frozen confection or into the chocolate / chocolate analogue or both. The nibs are preferably present in an amount of from 5 to 20% by weight of the product, more preferably from 10 to 15%. We have found that if higher amounts of nibs are used, the nibs remain in the mouth after the frozen confection has melted and has been swallowed. The resulting mass of nibs is chewy, mouth-drying and difficult to break-down, resulting in an unpleasant and unacceptable sensory experience.

In addition, beverages according to the invention (e.g. cocoa-based beverages) may also contain other sources of cocoa solids, and hence theobromine and caffeine.

The present invention will now be further described with reference to the following non-limiting examples.

Example 1

A chocolate-flavoured ice cream mix was made using the ingredients shown in Table 1.

Table 1

| Ingredient | Amount (wt %) |
| --- | --- |
| Cocoa powder 10/12 | 12.0 |
| Butterfat | 8.0 |
| Glucose syrup (63DE 78% solids) | 5.0 |
| Sucrose | 11.0 |
| Skim milk powder | 9.5 |
| Stabiliser | 0.156 |
| Emulsifier | 0.30 |
| Water | To 100 |

The mix was frozen and aerated in a Technohoy MF75 freezer to a temperature of approx -5°C and an overrun of approximately 60%. The frozen ice cream was collected and cocoa nibs (Nibs-S-473 from Barry-Callebaut) were added at 9.0% (225g cocoa nibs made up to 2500g with mix). Samples were collected into 500ml cartons and hardened at -32°C in a blast freezer. After hardening, the blocks were cut into pieces which weighed 17g (approx 27ml). The products were coated in a chocolate coating containing 15% cocoa nibs, whose composition is given in Table 2. The amount of coating was determined by weighing and was found to be 13.3g of coating per 17g of ice cream.

Table 2

| Ingredient | Amount (wt%) |
|---|---|
| Sucrose | 34.4 |
| Cocoa butter | 11.1 |
| Butter oil | 10.6 |
| Cocoa mass | 28.5 |
| Soya lecithin | 0.43 |
| Cocoa nibs | 15.0 |

Thus the product consisted of 51% ice cream, 37% chocolate and 12% nibs. The theobromine and caffeine contents were determined by HPLC analysis as follows. The frozen samples were ground. Next, the fat was removed by extraction 3 times with petroleum spirit. The de-fatted samples were then analysed using a Phenyl Hexyl 250 x 4.6 id mm 5μ HPLC column (mobile phases: A = 10% acetonitrile, 0.5% acetic acid. B = 100% acetonitrile). The theobromine and caffeine contents were found to be 500 mg and 40mg per 100 gram of product respectively. The frozen confection product contained only natural sources of caffeine and theobromine

Products were tasted by an informal panel. None of the samples were considered to taste bitter, despite the high levels of caffeine and theobromine. All of the tasters considered the products to be acceptable sensorially. Because of the size of the nibs (approximately 3mm), only a relatively small amount were bitten into when the product was consumed. Most were swallowed whole, so that the bitterness of the cocoa was mostly not perceived. The nibs provided an interesting textural contrast with the ice cream which may also have distracted the tasters from any bitterness of the product.

Example 2

An ice cream mix was made using the ingredients shown in Table 3.

Table 3

| Ingredient | Amount (wt %) |
|---|---|
| Skim milk powder | 9.29 |
| Refined coconut oil | 10.81 |
| Sucrose | 13.47 |
| Glucose syrup (63DE 78% solids) | 4.52 |
| Cocoa powder 10/12 | 1.00 |
| Theobromine | 0.60 |
| Caffeine | 0.10 |
| Emulsifier | 0.34 |
| Stabiliser | 0.36 |
| Vanilla flavour | 0.01 |
| Water | To 100 |

The mix was split into 2 parts. The first part was frozen in pots and then cut into products of 70g (approx 65ml). The products were coated in a chocolate coating (A) whose composition is given in Table 4. The pickup weight of the coating was 27g per 70g of ice cream.

Cocoa nibs (Nibs-S-473 from Barry-Callebaut) were added to the second part of the mix at 8.0 wt% (32.0g cocoa nibs made up to 400g with mix). This was frozen in pots and then cut into products of 70g (approx 65ml). The products were coated in a coating B, which was prepared by stirring 10% cocoa nibs into 90% of coating A (see Table 4). The weight of coating B was 30g per 70g of ice cream.

Table 4

| Ingredient | A | B |
|---|---|---|
| Sucrose | 40.5 | 36.5 |
| Cocoa butter | 13.0 | 11.7 |
| Butter oil | 12.5 | 11.3 |
| Cocoa mass | 33.5 | 30.2 |
| Soya lecithin | 0.50 | 0.45 |
| Cocoa nibs | - | 10.0 |

The products were analysed as described in Example 1. The ice cream and chocolate coating without nibs contained 450 mg theobromine and 120 mg caffeine per 100g product. The ice cream and chocolate coating with nibs contained 470 mg theobromine and 94 mg caffeine per 100g of product.

The products were tasted informally and were found to be quite bitter, but were acceptable, especially to tasters who regularly consumed dark chocolate.

Example 3

A taste-test was carried out to compare the palatability of a portion of a frozen confection product according to the invention with a portion of a chocolate product comprising similarly high levels of caffeine and theobromine. The portion of frozen confection product contained 65g of high-cocoa chocolate ice cream, which also contained chocolate nibs, and was coated with 43g of chocolate and nibs. This frozen confection product contained 477mg of theobromine and 70mg of caffeine per 108g portion. The comparative example was a 50g portion of "Green and Blacks" 85% cocoa chocolate bar which contained 424mg theobromine and 62mg caffeine. 10 volunteers were asked to consume the portion of the frozen confection product and the portion of the chocolate product on separate days. Only 50% of the volunteers were able to eat the whole portion of chocolate due to the very bitter taste of the high cocoa chocolate. Conversely, 90% of the volunteers ate the whole portion of the frozen confection product. In addition, 100% of the volunteers rated the taste of the portion of the frozen confection product as "acceptable" or "highly acceptable". The results of this taste test demonstrate that a frozen confection product according to the invention is more palatable and acceptable to consumers than a portion of chocolate containing similar amounts of theobromine and caffeine.

Example 4

A human study was carried out using a randomised, double-blind, crossover design to compare the effects of theobromine and caffeine on mood and on blood pressure. Volunteers consumed one of 4 treatments: theobromine only, caffeine only, theobromine and caffeine combined or placebo. The amount of theobromine in the treatment was 700mg; the amount of caffeine was 120mg; thus the ratio (5.8:1) was consistent with that found in chocolate and cocoa and cocoa beans. Theobromine was pharmaceutical grade, supplied by Fagron, Netherlands. All treatments were given in the form of a gelatine capsule, filled with the active. The placebo capsules matched in appearance and were filled with Avicel (microcrystalline cellulose). The gelatin capsules (size 1) were supplied by Blockland Medical supplies and meet European Pharmacopoeia (Ph. Eur) standards. Mood was assessed by emotion responses to questionnaires (Bond and Lader, 1974). Twenty-four healthy volunteers took part and arrived at the laboratory having consumed a standard lunch and having abstained from theobromine- and caffeine-containing foods such as chocolate for 12 hours. At the start of each session, participants answered a baseline set of questionnaires, which took approximately 15 minutes to complete. On completion, they were given a 10 minute break in which to consume the capsules. The questionnaire was repeated 1, 2 and 3 hours after ingestion. Blood pressure was measured at 0, 1 and 3 hours after treatment. Participants were allowed to read quietly between test batteries. The results are given in Tables 5 and 6.

Table 5: Alertness score in Bond-Lader test

| | Time zero | 1 hour | 2 hours | 3 hours |
|---|---|---|---|---|
| Placebo | 0 | - 0.07 | - 0.07 | 0 |
| Caffeine | 0 | + 0.01 | + 0.05 | + 0.07 |

(continued)

|  | Time zero | 1 hour | 2 hours | 3 hours |
|---|---|---|---|---|
| Theobromine | 0 | - 0.06 | - 0.03 | - 0.01 |
| Caffeine + Theobromine | 0 | + 0.01 | + 0.03 | + 0.03 |

Table 6: Change in systolic blood pressure (Hg mm)

|  | Time zero | 1 hour | 3 hours |
|---|---|---|---|
| Placebo | 0 | + 5 | 0 |
| Caffeine | 0 | + 10 | - 3 |
| Theobromine | 0 | + 3 | + 4 |
| Caffeine + Theobromine | 0 | + 5 | + 2 |

The results show that the combination of theobromine + caffeine delivers an increase in alertness without the rise in systolic blood pressure (significantly higher than placebo) after 1 hour that results from a treatment of caffeine only.

Example 5

A further human study was carried out using a double-blind, crossover, randomised, placebo-controlled experiment design to compare the effects of different levels of theobromine and caffeine on mood and on blood pressure. Volunteers consumed one of 3 treatments: placebo, low dose (300mg theobromine + 40mg caffeine) and high dose (450mg theobromine + 60mg caffeine). Volunteers were required to abstain from all food and drinks containing caffeine or theobromine from 8:00pm on the previous night and ate a standardized light meal at home. The study took place in the afternoon. Acute effects of the three treatments were tested over a period of three weeks with a separation of 1 week between the treatments. Volunteers' self-reported mood was assessed by emotion responses to questionnaires (Bond and Lader, 1974) and was measured 1 and 2 hrs post-treatment.

Post-treatment measurements of mood were statistically modelled as a linear function of the corresponding baseline measurement and different treatments taking into account inter-participant variability (Tables 7 and 8). An increase in alertness was observed at both 1 and 2 hrs post-treatment for the low and high dose treatments. A similar linear trend of increase in calmness was observed.

Table 7: Alertness score in Bond-Lader test

|  | 1 hour | 2 hours | Overall change |
|---|---|---|---|
| Placebo | 0.79 | 0.78 | - 0.01 |
| Low dose | 0.80 | 0.82 | + 0.02 |
| High dose | 0.82 | 0.83 | + 0.01 |

Table 8: Calmness score in Bond-Lader test

|  | 1 hour | 2 hours | Overall change |
|---|---|---|---|
| Placebo | 0.83 | 0.81 | - 0.02 |
| Low dose | 0.82 | 0.83 | + 0.01 |
| High dose | 0.84 | 0.85 | + 0.01 |

Blood pressure was measured before and 1 hr post-treatment (Table 9). An increase in systolic blood pressure was observed at 1 hr after both the low dose treatment and high dose treatment. However, the increase in systolic blood pressure after the high dose treatment was less than that caused by the low dose even though the high dose treatment contained 50% more caffeine than the low dose.

Table 9: Change in systolic blood pressure (Hg mm)

|  | Time zero | 1 hour | Overall change |
|---|---|---|---|
| Placebo | 111 | 115 | +4 |
| Low dose | 112 | 121 | +9 |
| High dose | 113 | 121 | +8 |

These results further show that the combination of theobromine + caffeine delivers an increase in alertness and calmness yet even when the amount of caffeine is increased by 50% in the high dose treatment the rise in systolic blood pressure is attenuated by the increased levels of theobromine.

Example 6

A cordial-based beverage was made as follows: 20ml of blackcurrant cordial was diluted in 80 ml of water to which 700mg of theobromine and 70 mg of caffeine were added.

Example 7

A cocoa-based beverage, in the form of a drinking chocolate, was made as follows: A batch of drinking chocolate was prepared by mixing 240g sugar, 40g fat-reduced cocoa and 1940g whole milk. A 100ml aliquot of the drinking chocolate was taken from the batch and 700mg of theobromine and 70mg of caffeine were added to the aliquot. The beverage was tasted by an informal panel. It was not considered to taste bitter, despite the high levels of caffeine and theobromine, and all the tasters considered the product to be highly acceptable.

**Claims**

1. A frozen confection or a beverage which contains at least 400mg of theobromine and at least 40mg of caffeine per 100 grams of the product.

2. A product according to claim 1 which comprises at least 500mg of theobromine per 100g of the product.

3. A product according to claim 1 or claim 2 which comprises at least 50mg of caffeine per 100g of the product.

4. A product according to any of claims 1 to 3 wherein the ratio of the amounts of theobromine and caffeine is at least 3:1.

5. A product according to any of claims 1 to 4 wherein the product is a frozen confection.

6. A product according to claim 5 which comprises cocoa solids.

7. A product according to claim 5 or claim 6 which comprises a chocolate or chocolate analogue.

8. A product according to any of claims 5 to 7 which comprises cocoa nibs.

9. A product according to any of claims 1 to 4 wherein the product is a beverage.

10. A product according to claim 9 wherein the beverage is tea-based or coffee-based.

11. A product according to claim 9 wherein the beverage is cocoa-based.

12. A product according to any of claims 1 to 11 wherein the product has an overrun of at least 50%.

13. A product according to any of claims 1 to 12 in a portion size of from 50g to 500g.

**Patentansprüche**

1. Gefrorenes Süßwarenprodukt oder Getränk, das wenigstens 400 mg Theobromin und wenigstens 40 mg Koffein pro 100 g des Produkts enthält.

2. Produkt gemäß Anspruch 1, das wenigstens 500 mg Theobromin pro 100 g des Produkts umfasst.

3. Produkt gemäß Anspruch 1 oder Anspruch 2, das wenigstens 50 mg Koffein pro 100 g des Produkts umfasst.

4. Produkt gemäß einem der Ansprüche 1 bis 3, wobei das Verhältnis der Mengen von Theobromin und Koffein wenigstens 3 : 1 ist.

5. Produkt gemäß einem der Ansprüche 1 bis 4, wobei das Produkt ein gefrorenes Süßwarenprodukt ist.

6. Produkt gemäß Anspruch 5, das Kakaofeststoffe umfasst.

7. Produkt gemäß Anspruch 5 oder Anspruch 6, das eine Schokolade oder ein Schokoladen-Analogon umfasst.

8. Produkt gemäß einem der Ansprüche 5 bis 7, das Kakaobohnenbruch umfasst.

9. Produkt gemäß einem der Ansprüche 1 bis 4, wobei das Produkt ein Getränk ist.

10. Produkt gemäß Anspruch 9, wobei das Getränk auf Teebasis oder Kaffeebasis ist.

11. Produkt gemäß Anspruch 9, wobei das Getränk auf Kakaobasis ist.

12. Produkt gemäß einem der Ansprüche 1 bis 11, wobei das Produkt einen Aufschlag von wenigstens 50 % hat.

13. Produkt gemäß einem der Ansprüche 1 bis 12 in einer Portionsgröße von 50 g bis 500 g.


**Revendications**

1. Pâtisserie congelée ou boisson qui contient au moins 400 mg de théobromine et au moins 40 mg de caféine pour 100 grammes de produit.

2. Produit selon la revendication 1 qui comprend au moins 500 mg de théobromine pour 100 grammes de produit.

3. Produit selon la revendication 1 ou la revendication 2 qui comprend au moins 50 mg de caféine pour 100 grammes de produit.

4. Produit selon l'une quelconque des revendications 1 à 3, dans lequel le rapport des quantités de théobromine et de caféine est d'au moins 3:1.

5. Produit selon l'une quelconque des revendications 1 à 4, dans lequel le produit est une pâtisserie congelée.

6. Produit selon la revendication 5 qui comprend des fractions solides de cacao.

7. Produit selon la revendication 5 ou la revendication 6 qui comprend du chocolat ou un analogue de chocolat.

8. Produit selon l'une quelconque des revendications 5 à 7 qui comprend du grué de cacao.

9. Produit selon l'une quelconque des revendications 1 à 4, dans lequel le produit est une boisson.

10. Produit selon la revendication 9, dans lequel la boisson est à base de thé ou à base de café.

11. Produit selon la revendication 9, dans lequel la boisson est à base de cacao.

**12.** Produit selon l'une quelconque des revendications 1 à 11, dans lequel le produit a un foisonnement d'au moins 50 %.

**13.** Produit selon l'une quelconque des revendications 1 à 12 dans une taille de portion de 50 à 500 g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007042745 A

### Non-patent literature cited in the description

- **Smit et al.** *Psychopharmacology,* 2004, vol. 176, 412-419
- **M.U. Eteng et al.** Caffeine and theobromine levels in selected Nigerian beverages. *Plant foods for Human Nutrition,* 1999, vol. 54, 337-344
- **Buijsse et al.** Cocoa Intake, Blood Pressure and Cardiovascular Mortality. *Arch Intern Med.,* 27 February 2006, vol. 166
- *The Guardian,* 29 April 2005
- Chocolate and Cocoa. Blackwell Science Ltd, 1999
- **Craig et al.** *Journal of Food Science,* January 1984, vol. 49, 302-303